# NEUE EUROPÄISCHE PATENTSCHRIFT

(11) **EP 2 499 898 B2**
(45) Veröffentlichungstag und Bekanntmachung des Hinweises auf die Entscheidung über den Einspruch: **10.07.2019**
(45) Hinweis auf die Patenterteilung: 25.05.2016
(21) Anmeldenummer: 12152222.1
(22) Anmeldetag: 24.01.2012
(51) Int. Cl.: A01F 29/14

(54) **Verfahren und Vorrichtung zum Betreiben eines Feldhäckslers**
Method and device for operating a chaff cutter
Procédé et dispositif destinés au fonctionnement d'une ramasseuse-hacheuse

(30) Priorität: 17.03.2011 DE 102011014245
(43) Veröffentlichungstag der Anmeldung: 19.09.2012
(73) Patentinhaber: CLAAS Saulgau GmbH, 88348 Bad Saulgau (DE)
(72) Erfinder: Oliva, Christoph, 88348 Bad Saulgau (DE); Winkler, Martin, 89077 Ulm (DE)

(56) Entgegenhaltungen:
- WO-A1-01/65919
- WO-A1-02/056672
- DE-A1- 2 819 200
- DE-A1-102008 002 428
- DE-A1-102009 002 849
- DE-A1-102009 003 242
- FR-A1- 2 173 352
- US-A- 5 791 128
- SCHNEIDER, H. ET AL: "Differenzflächenventile (Logikelemente) für Schnellstop und Messertrommel-Bremse an einem Feldhäcksler", VDI-BERICHTE, no. 1895, 2005, pages 237-242,

## Beschreibung

Die Erfindung betrifft ein Verfahren und eine Vorrichtung zum Betreiben eines Feldhäckslers nach dem Oberbegriff des Anspruches 1.

### Stand der Technik

Bekannt sind Reversierantriebe für die Häckseltrommel von Feldhäckslern zum Schleifen der Häckselmesser mittels einer im Feldhäcksler vorhandenen Schleifeinrichtung. Der Schleifvorgang dient dazu, die Häckselmesser der Häckseltrommel während des Feldeinsatzes neu zu schärfen. Es hat sich in der Praxis herausgestellt, dass es für die Schärfe der Messerschneide günstiger ist, wenn die Drehrichtung gegenüber dem Häckselbetrieb umgekehrt wird. Diesen Rückwärtslauf bezeichnet man in der Fachwelt als Reversiervorgang.

Bekannte Feldhäcksler verfügen dazu über mechanische Schaltgetriebe, die eine Umkehrung der Drehrichtung ermöglichen. Diese Schaltgetriebe stellen einen erheblichen technischen und Raum verschlingenden Aufwand dar und verursachen dabei erhebliche Kosten.

Aus der EP 0 848 902 ist ein Verfahren zum Betreiben eines Feldhäckslers bekannt, mit dem Vorpresswalzen hydrostatisch und regelbar antreibbar sind und auch das Vorsatzgerät nach Abschalten von dessen mechanischem Antrieb beim Reversieren durch Zuschalten des Antriebs der Vorpresswalzen hydrostatisch angetrieben wird und wobei das dem mechanischen Antrieb des Vorsatzgerätes zugeordnete Getriebe mit dem, dem hydrostatischen Antrieb der Vorpresswalzen zugeordneten Getriebe durch eine Kupplung in und außer Eingriff bringbar ist.

### Aufgabenstellung

Hier setzt die Aufgabe der Erfindung an mit dem Ziel, einen möglichst einfachen und kostengünstigen hydraulischen Reversierantrieb sowohl für die Vorpresswalzen, als auch für die Häckseltrommel zu ermöglichen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung betrifft ein Verfahren und eine Vorrichtung zum Betreiben eines Feldhäckslers für landwirtschaftliches Erntegut, welcher mit einem Vorsatzgerät, beispielsweise einer Pick-up oder einem Maisgebiss ausgerüstet ist.

Der Feldhäcksler umfasst eine mit Häckselmessern (29) besetzten Häckseltrommel (1), der in Gutflussrichtung (30) hydrostatisch angetriebene Vorpresswalzen 2,2',3,3' vorgelagert sind, wobei der hydrostatische Antrieb einen Hydraulikmotor (13) und eine in den mechanischen Antrieb der Häckseltrommel (1) eingekoppelte Hydraulikpumpe (12) umfasst.

Erfindungsgemäß kann die zum Antrieb erforderliche Hydraulikpumpe 12 einerseits als hydrostatische Druckquelle zum Antrieb der Vorpresswalzen 2,2',3,3' und andererseits als hydrostatischer Antrieb dann allerdings als Hydraulikmotor 12 zum Reversieren der Häckseltrommel 1 genutzt werden.

Dabei kann die hydraulische Steuerung der Hydraulikpumpe 12 beschaltungstechnisch so ausgelegt sein, dass diese einerseits den Hydraulikmotor 13 zum Antrieb der Vorpresswalzen 2,2',3,3' im geschlossenen Kreislauf hydrostatisch antreiben kann und anderseits auch im offenen Kreislauf als Hydraulikmotor 12 hydrostatisch betrieben werden kann. Dabei kann die Hydraulikpumpe 12 einerseits in einem geschlossenen Kreislauf und andererseits in einem offenen Kreislauf eingebunden sein.

Einerseits ist die Hydraulikpumpe 12 in einem offenen hydraulischen Kreislauf des Feldhäckslers 1 parallel zum Ventilblock 15 der Arbeitshydraulik schaltungstechnisch derart eingebunden, dass der Hydraulikpumpe 12 eine Druckabschneidung 24 so zugeordnet ist, dass diese als hydrostatische Bremse der Schwungmasse der Häckseltrommel 1 genutzt werden kann und andererseits ist die Hydraulikpumpe 12 dem geschlossenen Kreislauf zum Antrieb der Vorpresswalzen 2,2' und 3,3' mit einer Druckabschneidung 23 so zugeordnet, dass diese als hydrostatische Bremse der Schwungmasse der Vorpresswalzen 2,2',3,3' genutzt werden kann.

Zudem kann die Hydraulikpumpe 12 zum Reversieren der Häckseltrommel 1 für den Schleifvorgang zum Nachschärfen der Häckselmesser der Häckseltrommel 1 genutzt werden.

Weitere Einzelheiten können dem nachfolgend dargelegten Ausführungsbeispiel entnommen werden.

### Ausführungsbeispiel

Es zeigen:
- Fig.1: eine symbolische Darstellung eines Antriebsstrangs für einen Häcksler mit Einzugswalzen im Beschaltungszustand der Hydraulikventile in der Situation normaler Betriebszustand des Häckselbetriebs
- Fig.2: eine symbolische Darstellung eines Antriebsstrangs für einen Häcksler mit Einzugswalzen im Beschaltungszustand der Hydraulikventile in der Situation Reversierbetrieb der Häckseltrommel
- Fig.3: eine symbolische Darstellung eines Antriebsstrangs für einen Häcksler mit Einzugswalzen im Beschaltungszustand der Hydraulikventile in der Situation Schnellstop der Vorpresswalzen
- Fig.4: eine symbolische Darstellung eines Antriebsstrangs für einen Häcksler mit Einzugswalzen im Beschaltungszustand der Hydraulikventile in der Situation Reversierbetrieb der Vorpresswalzen
- Fig.5: eine symbolische Darstellung eines Antriebsstrangs für einen Häcksler mit Einzugswalzen im Beschaltungszustand der Hydraulikventile in der Situation Schnellstop für Einzugswalzen und Abbremsen der Häckseltrommel.

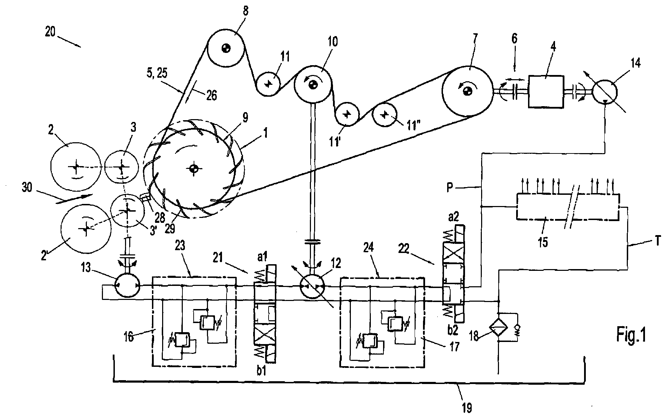

Die Figuren Fig.1 bis Fig.5 zeigen anhand symbolischer Darstellungen den Antriebsstrang 20 für die Häckseltrommel 1 und den diesen vorgelagerten Vorpresswalzen 2,2',3,3' des Einzugsgehäuses eines Feldhäckslers. Die stromaufwärts der Vorpresswalzen 2,2', 3,3' gelegene Häckseltrommel 1, wird von einem Verbrennungsmotor 4 über einen Umschlingungstrieb 5 angetrieben. Der Umschlingungstrieb 5, vorzugsweise ausgebildet als mehrrilliges Kraftband, umschlingt die Antriebsscheibe 7, die über eine Schaltkupplung 6 mit dem Verbrennungsmotor 4 in Antriebsverbindung steht. Der Umschlingungstrieb 5 umschlingt weiterhin die Antriebsscheibe 8 des der Häckseltrommel 1 stromaufwärts nachgeordneten Nachbeschleunigers, die Antriebsscheibe 9 der Häckseltrommel 1, sowie die Antriebsscheibe 10 der Hydraulikpumpe 12 zum Antrieb des Hydraulikmotors 13 der Vorpresswalzen 2,2', 3,3'. Die Spannrollen 11, 11', 11" dienen dabei lediglich dazu, den Umschlingungstrieb 5 vorzuspannen.

Der Hydraulikmotor 13 wird von der Hydraulikpumpe 12 druckbeaufschlagt. Dabei ist die Hydraulikpumpe 12 in dem Ausführungsbeispiel als Verstellpumpe mit veränderbarem Förderstrom dargestellt, so dass die Drehgeschwindigkeit der Vorpresswalzen 2,2', 3,3' dem Massendurchsatz der Erntegutmatte angepasst werden kann. Die Hydraulikventile, ausgeführt als Wegeventile 21,22 steuern die ihnen zugeordneten Ölströme entsprechend ihrer Schaltstellungen a1,a2,b1,b2. Die Wegeventile 21,22 besitzen vier Leitungsanschlüsse und 3 Schaltstellungen, mit Betätigungsmagneten, denen im erregten Zustand Schaltstellungen a1,a2,b1,b2 zugeordnet sind, wobei die unbetätigte Schaltstellung die Mittelstellung ergibt.

Dem Hydraulikmotor 13 ist die Druckabschneidung 16 und der Hydraulikpumpe 12 ist die Druckabschneidung 17 zugeordnet, wobei die Druckabschneidungen 16,17 aus zwei Druckbegrenzungsventilen bestehen.

Die Druckabschneidungen 16,17 bewirken, dass bei den nachlaufenden Schwungmassen der Vorpresswalzen 2,2',3,3' bzw. der Häckseltrommel 1, diese generatorisch als Drehmomente an den An- bzw. Abtriebswellen der Hydraulikpumpe 12 bzw. dem Hydraulikmotor 13 angreifen, so dass dadurch ein hydrostatischer Reaktionsdruck an der Hydraulikpumpe 12 bzw. dem Hydraulikmotor 13 verursacht wird und dass damit die voreingestellten Maximaldrücke nicht überschritten werden. Somit sind sowohl die Hydraulikpumpe 12 als auch der Hydraulikmotor 13 in der Mittelstellung der Wegeventile 21,22 hydrostatisch eingespannt, wodurch eine hydrostatische Bremse realisiert ist.

Die Druckabschneidungen 16,17 bewirken in der Mittelstellung der Wegeventile 21,22 einerseits eine starke Bremswirkung an den Schwungmassen in der Auslaufphase der Vorpresswalzen 2,2',3,3' und der Häckseltrommel 1 und andererseits sind die Vorpresswalzen 2,2',3,3' und die Häckseltrommel 1 im Stillstand gegen Verdrehung eingespannt.

Fig.1 zeigt den Antriebsstrang 20 im Beschaltungszustand der Hydraulikventile 21,22 im Betriebszustand des laufenden Häckselbetriebs, d.h. sowohl die Häckseltrommel 1, als auch die Vorpresswalzen 2,2', 3,3' sind mit ihren Nenndrehzahlen angetrieben. Die Hydraulikpumpe 12 steht mit der Antriebsscheibe 10 und damit mit dem Umschlingungstrieb 5 in Antriebsverbindung. Dazu ist die Schaltkupplung 6 eingerückt und mit dem Verbrennungsmotor 4 gekoppelt. Das Treibmittel 25 bewegt sich in Umlaufrichtung 27, so dass die Häckselmesser 29 mit der Gegenschneide 28 in Schnittverbindung stehen. Die Hydraulikpumpe 12 treibt den Hydraulikmotor 13 an, der wiederum die Vorpresswalzen 2,2', 3,3' antreibt, so dass sich das Erntegut mit der Gutflussrichtung 30 in Richtung der Häckseltrommel 1 bewegt. Das Wegeventil 21 ist in Schaltstellung a1 und das Wegeventil 22 ist in Schaltstellung b2 aktiviert, so dass der hydraulische Ölfluß sich in einem geschlossenen Kreislauf bewegt, der sich durch beide Wegeventile 21 und 22 hindurch erstreckt.

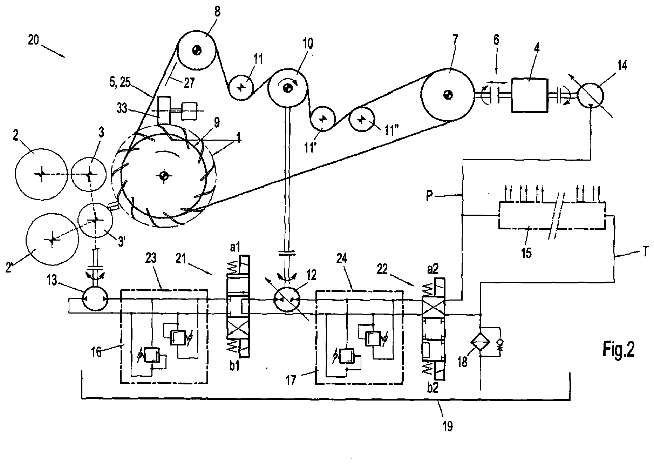

Fig.2 zeigt den Antriebsstrang 20 im Beschaltungszustand der Hydraulikventile 21,22 in der Situation der Unterbrechung des Häckselbetriebs zum Reversieren der Häckseltrommel 1. Dieses Reversieren wird vornehmlich genutzt zum Nachschärfen und Schleifen der Häckselmesser mittels einer im Häckselaggregat integrierten Schleifvorrichtung 33, die dem Fachmann bekannt ist. Auf die weitere Beschreibung der Schleifvorrichtung kann daher an dieser Stelle verzichtet werden. Zu diesem Zweck wird die Schaltkupplung 6 ausgerückt, so dass die Antriebsverbindung des Antriebsstrangs 20 zum Verbrennungsmotor 4 unterbrochen ist. Damit besteht gegenüber dem Verbrennungsmotor 4 keine Antriebsverbindung, weder zur Häckseltrommel, noch zur Hydraulikpumpe 12 zum Antrieb der Vorpresswalzen 2,2',3,3'. Das Wegeventil 21 ist in Sperrstellung geschaltet und somit ist der hydraulische Ölfluss im geschlossenen Kreislauf zwischen dem Hydraulikmotor 13 und der Hydraulikpumpe 12 gesperrt. Das Wegeventil 22 ist in die Schaltstellung a2 überführt, so dass sich nunmehr ein Ölfluss im offenen Kreislauf zwischen der Hydraulikpumpe 14 der Arbeitshydraulik als Druckquelle über die Druckleitung P und der Hydraulikpumpe 12, der Tankrücklaufleitung T und dem Rücklauffilter 18 in den Hydrauliktank 19 einstellt.

Damit wird die Hydraulikpumpe 12 nunmehr zum Hydraulikmotor zum Antrieb der Antriebsscheibe 10, welche nunmehr den Umschlingungstrieb 5, bzw. das Treibmittel 25 antreibt. Dabei ist die Schaltstellung a2 so ausgelegt, dass sich die Drehrichtung der Antriebsscheibe 10 gegenüber dem Häckselbetrieb umkehrt und der Umschlingungstrieb 5 seine Umlaufrichtung 27 nunmehr in die Umlaufrichtung 26 umkehrt. Dieses bedeutet zugleich eine Umkehrung der Drehrichtung der Häckseltrommel 1 im Sinne der Reversierung, welche zum Nachschärfen der Häckselmesser 29 mittels der Schleifvorrichtung 33 genutzt wird.

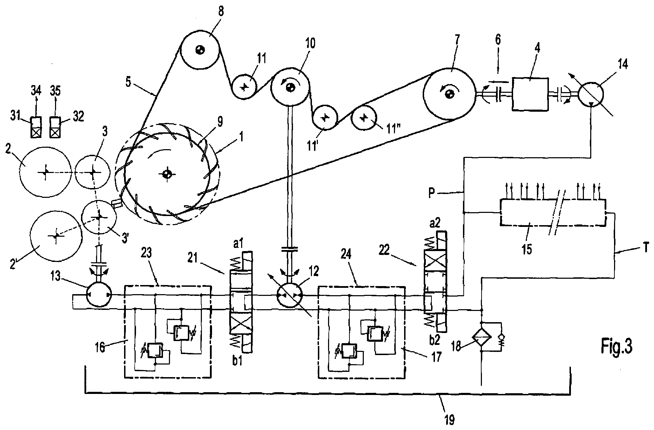

Fig.3 zeigt den Antriebsstrang 20 im Beschaltungszustand der Hydraulikventile 21,22 in der Situation der Unterbrechung des Häckselbetriebs in der Schnellstop - Situation der Vorpresswalzen 2,2', 3,3'. Diese Situation ist dann gegeben, wenn der Metalldetektor 31 einen Fremdkörper aus Metall im Erntegutstrom detektiert hat und es somit zu einem Schnellstop der Vorpresswalzen 2,2', 3,3' gekommen ist. Analog gilt dieses auch für den Steindetektor 32. Die Wirkungsweisen von Metall- und Steindetektoren sind dem Fachmann bekannt, so dass auf die weitere Beschreibung an dieser Stelle verzichtet werden kann. Die Situation des Schnellstops tritt dann ein, wenn eines der Ausgangssignale 34 oder 35 der Steuerung den Auslöser dazu liefert. Dieses bedeutet, dass das Wegeventil 21 in Sperrstellung übergeht und dass der Ölfluss in dem geschlossenen Kreislauf zwischen Hydraulikpumpe 12 und Hydraulikmotor 13 schlagartig unterbrochen wird. In diesem Zusammenhang wird dann die Druckabschneidung 23 wie zuvor beschrieben als momentane Stoppbremse aktiviert. Der von der Hydraulikpumpe 12 weiterhin geförderte Ölstrom kann dabei ungehindert die Mittelstellungen der Wegeventile 21 und 22 passieren.

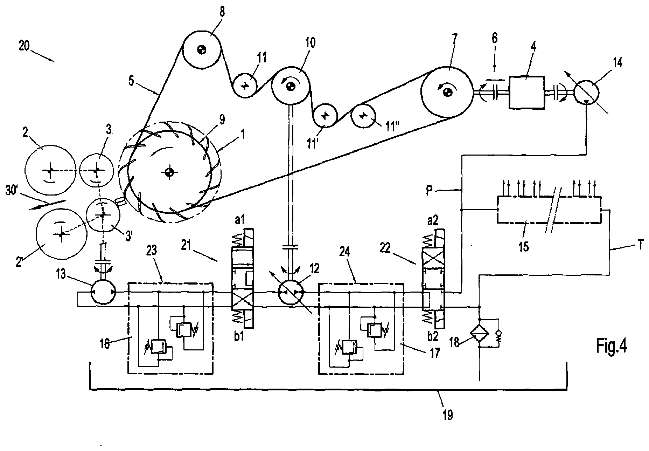

Fig.4 zeigt den Antriebsstrang 20 im Beschaltungszustand der Hydraulikventile 21,22 in der Situation der Unterbrechung des Häckselbetriebs zum Reversieren der Vorpresswalzen 2,2', 3,3'. Dieses Reversieren wird vornehmlich genutzt zum Rückwärts Fördern der Erntegutmatte im Falle von Verstopfungen, oder wenn der Metalldetektor einen Fremdkörper aus Metall im Erntegutstrom detektiert hat und es somit zu einem Schnellstop der Vorpresswalzen 2,2', 3,3' gekommen ist.

Die Hydraulikpumpe 12 steht mit der Antriebsscheibe 10 und damit mit dem Umschlingungstrieb 5 in Antriebsverbindung. Dazu ist die Schaltkupplung 6 eingerückt und mit dem Verbrennungsmotor 4 gekoppelt. Das Treibmittel 25 bewegt sich in Umlaufrichtung 27, so dass die Häckselmesser 29 mit der Gegenschneide 28 in Schnittverbindung stehen. Die Hydraulikpumpe 12 treibt den Hydraulikmotor 13 an, der wiederum die Vorpresswalzen 2,2', 3,3' antreibt. Das Wegeventil 21 befindet sich nun in der Schaltstellung b1 und das Wegeventil 22 ist in Schaltstellung b2. Damit kehrt sich die Bewegungsrichtung der Vorpresswalzen 2,2', 3,3' um, welches dem Vorgang des Reversierens entspricht, so dass sich das Erntegut mit der Gutflussrichtung 30' umkehrt, d.h. von der Häckseltrommel 1 weg bewegt. Der hydraulische Ölfluß bewegt sich dabei in einem geschlossenen Kreislauf, der sich durch beide Wegeventile 21 und 22 hindurch erstreckt.

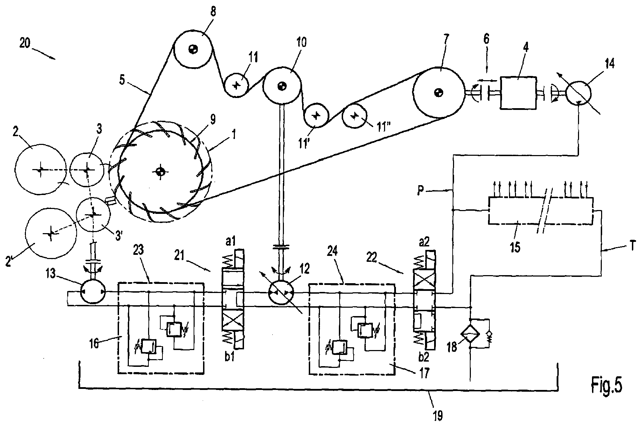

Fig.5 zeigt den Antriebsstrang 20 im Beschaltungszustand der Hydraulikventile 21,22 in der Situation der Unterbrechung des Häckselbetriebs, d.h. die Vorpresswalzen 2,2', 3,3' und die Häckseltrommel 1 werden nach dem Prinzip des Schnellstops abgebremst und zum Stillstand gebracht. Dazu ist die Schaltkupplung 6 ausgerückt und vom Verbrennungsmotor 4 abgekoppelt.

Dabei befinden sich beide Wegeventile 21,22 in der unbetätigten Mittelstellung, so dass beide Ölströme, die vom generatorischen Betrieb der Vorpresswalzen 2,2', 3,3' und der Häckseltrommel 1 ausgehen, gesperrt sind. Beide Druckabschneidungen 23 und 24 wirken als hydraulische Bremsen und bringen beide Drehbewegungen, die der Vorpresswalzen 2,2', 3,3' und die der Häckseltrommel 1 im Sinne eines Notstops zum Erliegen.

Dabei sind die Vorpresswalzen 2,2', 3,3' und auch die Häckseltrommel 1 hydraulisch eingespannt, und zwar die Vorpresswalzen 2,2',3,3' über den Hydraulikmotor 13 und die Häckseltrommel 1 über die Hydraulikpumpe 12.

Durch diese Art der hydraulischen Steuerung und der Beschaltung des Hydraulikmotors 13 und der Hydraulikpumpe 12 durch die Wegeventile 21,22 und der Druckabschneidungen 23,24 ist es möglich, dass die Häckseltrommel 1 und die Vorpresswalzen (2,2',3,3') in die Betriebszustände
a) Antrieb der Vorpresswalzen (2,2',3,3')
b) Reversieren der Häckseltrommel (1)
c) Reversieren der Vorpresswalzen (2,2',3,3')
d) Notstopp der Vorpresswalzen (2,2',3,3')
e) Abbremsen bzw. Notstop der Vorpresswalzen (2,2',3,3') und Häckseltrommel (1)
überführt werden können.

Die Art der hydraulischen Beschaltung über die Wegeventile 21 und 22 sowie der Druckabschneidungen 23,24 sind beispielhaft für alle sonstigen, diesem Zweck dienenden hydraulischen Beschaltungen zu sehen, so dass diese Lösung lediglich als exemplarische Lösung anzusehen ist.

### Bezugszeichenliste

- 1: Häckseltrommel
- 2,2': Vorpresswalze
- 3,3': Vorpresswalze
- 4: Verbrennungsmotor
- 5: Umschlingungstrieb
- 6: Schaltkupplung
- 7: Antriebsscheibe Umschlingungstrieb
- 8: Antriebsscheibe Nachbeschleuniger
- 9: Antriebsscheibe Häckseltrommel
- 10: Antriebsscheibe Hydraulikpumpe
- 11,11',11": Spannrolle
- 12: Hydraulikpumpe
- 13: Hydraulikmotor
- 14: Hydraulikpumpe der Arbeitshydraulik
- 15: Ventilblock der Arbeitshydraulik
- 16: Druckabschneidung
- 17: Druckabschneidung
- 18: Rücklauffilter
- 19: Hydrauliktank
- 20: Antriebsstrang
- 21: Hydraulikventil, Wegeventil
- 22: Hydraulikventil, Wegeventil
- 23: Druckabschneidung
- 24: Druckabschneidung
- 25: Treibmittel (Kraftband)
- 26: Umlaufrichtung
- 27: Umlaufrichtung
- 28: Gegenschneide
- 29: Häckselmesser
- 30,30': Gutflussrichtung
- 31: Metalldetektor
- 32: Steindetektor
- 33: Schleifvorrichtung
- 34: Ausgangssignal
- 35: Ausgangssignal

- a1: Schaltstellung
- a2: Schaltstellung
- b1: Schaltstellung
- b2: Schaltstellung
- P: Druckleitung
- T: Tankrücklaufleitung

## Patentansprüche

1. Verfahren zum Betreiben eines Feldhäckslers für landwirtschaftliches Erntegut, mit einem Vorsatzgerät, beispielsweise einer Pick-up oder einem Maisgebiss, und mit einer mit Häckselmessern (29) besetzten Häckseltrommel (1), der in Gutflussrichtung (30) hydrostatisch angetriebene Vorpresswalzen (2,2' ,3,3') vorgelagert sind, wobei der hydrostatische Antrieb einen Hydraulikmotor (13) und eine in den mechanischen Antrieb der Häckseltrommel (1) eingekoppelte Hydraulikpumpe (12) umfasst, und die Hydraulikpumpe (12) einerseits als hydrostatische Druckquelle des Hydraulikmotors (13) zum Antrieb der Vorpresswalzen (2,2',3,3') und andererseits als Hydraulikmotor zum Reversieren der Häckseltrommel (1) genutzt wird, **dadurch gekennzeichnet, dass** zum Reversieren der Häckseltrommel (1)
eine Schaltkupplung (6) ausgerückt wird, so dass der Antriebsstrang (20) zwischen einem Verbrennungsmotor (4) und der Häckseltrommel (1) sowie zur Hydraulikpumpe (12) unterbrochen ist,
ein Wegeventil (21) in Sperrstellung geschaltet wird und den hydraulischen Ölfluss im geschlossenen Kreislauf zwischen dem Hydraulikmotor (13) und der Hydraulikpumpe (12) sperrt, und
ein weiteres Wegeventil (22) in eine Schaltstellung überführt wird, so dass sich ein Ölfluss im offenen Kreislauf zwischen einer Hydraulikpumpe (14) einer Arbeitshydraulik als Druckquelle über eine Druckleitung (P) und der Hydraulikpumpe (12), einer Tankrücklaufleitung (T) und einem Rücklauffilter (18) in den Hydrauliktank (19) einstellt.

2. Feldhäcksler für landwirtschaftliches Erntegut, mit einem Vorsatzgerät, beispielsweise einer Pick-up oder einem Maisgebiss, und mit einer mit Häckselmessern (29) besetzten Häckseltrommel (1), der in Gutflussrichtung (30) hydrostatisch angetriebene Vorpresswalzen (2,2' ,3,3') vorgelagert sind, wobei der hydrostatische Antrieb einen Hydraulikmotor (13) und eine in den mechanischen Antrieb der Häckseltrommel (1) eingekoppelte Hydraulikpumpe (12) umfasst, und die Hydraulikpumpe (12) einerseits als hydrostatische Druckquelle des Hydraulikmotors (13) zum Antrieb der Vorpresswalzen (2, 2', 3, 3') und anderseits als Hydraulikmotor zum Reversieren der Häckseltrommel (1) nutzbar ist, zur Durchführung des Verfahrens nach Anspruch 1, **dadurch gekennzeichnet, dass** ein Wegeventil (21) vorgesehen ist, durch welches der hydraulische Ölfluss zwischen dem Hydraulikmotor (13) und der Hydraulikpumpe (12) sperrbar ist.

3. Feldhäcksler nach Anspruch 2, **dadurch gekennzeichnet, dass** der Reversiervorgang zum Nachschärfen der Häckselmesser (29) mittels einer Schleifvorrichtung (33) nutzbar ist.

4. Feldhäcksler nach Anspruch 2, **dadurch gekennzeichnet, dass** die hydraulische Steuerung der Hydraulikpumpe (12) beschaltungstechnisch so ausgelegt ist, dass diese einerseits den Hydraulikmotor (13) zum Antrieb der Vorpresswalzen (2, 2' ,3,3') im geschlossenen Kreislauf hydrostatisch antreiben und diese andererseits im offenen Kreislauf als Hydraulikmotor hydrostatisch betreibbar ist.

5. Feldhäcksler nach Anspruch 2, **dadurch gekennzeichnet, dass** der offene Kreislauf der Hydraulikpumpe (12) einer Hydraulikpumpe der Arbeitshydraulik (14) des Feldhäckslers zugeordnet ist.

6. Feldhäcksler nach Anspruch 2, **dadurch gekennzeichnet, dass** dem offenen Kreislauf der Hydraulikpumpe (12) eine Druckabschneidung (24) derart zugeordnet ist, dass dieses als hydraulische Bremse der Schwungmasse der Häckseltrommel (1) nutzbar ist.

7. Feldhäcksler nach Anspruch 2, **dadurch gekennzeichnet, dass** dem geschlossenen Kreislauf der Hydraulikpumpe (12) eine Druckabschneidung (23) derart zugeordnet ist, dass dieses als hydraulische Bremse der Schwungmasse der Vorpresswalzen (2, 2', 3, 3') nutzbar ist.

8. Feldhäcksler nach Anspruch 2, **dadurch gekennzeichnet, dass** das Reversieren der Häckseltrommel (1) für den Schleifvorgang zum Nachschärfen der Häckselmesser der Häckseltrommel (1) nutzbar ist.

9. Feldhäcksler nach Anspruch 2 bis 9, **dadurch gekennzeichnet, dass** die hydraulische Steuerung und deren Beschaltung durch Wegeventile (21 ,22) und Druckabschneidungen (23, 24) so ausgestaltet ist, dass die Häckseltrommel 1 und die Vorpresswalzen (2,2' ,3,3') in die verschiedenen Betriebszustände
a) Antrieb der Vorpresswalzen (2,2' ,3,3')
b) Reversieren der Häckseltrommel (1)
c) Reversieren der Vorpresswalzen (2,2',3,3')
d) Notstopp der Vorpresswalzen (2,2' ,3,3')
e) Abbremsen bzw. Notstop der Vorpresswalzen (2,2',3,3') und
Häckseltrommel (1)
überführbar ist.

## Claims

1. A method of operating a forage harvester for agricultural crop material having a front-mounted implement, for example a pick-up or a corn header, and having a chopping drum (1) which is provided with chopping blades (29) and which in the material flow direction (30) is preceded by hydrostatically driven pre-pressing rolls (2, 2', 3, 3'), wherein the hydrostatic drive includes a hydraulic motor (13) and a hydraulic pump (12) coupled into the mechanical drive of the chopping drum (1), and the hydraulic pump (12) is used on the one hand as the hydrostatic pressure source of the hydraulic motor (13) for driving the pre-pressing rolls (2, 2', 3, 3') and on the other hand as a hydraulic motor for reversing the chopping drum (1), **characterized in that**, to reverse the chopping drum (1),
a clutch (6) is disengaged such that the drive train (20) between a combustion engine (4) and the chopping drum (1) and to the hydraulic pump (12) is interrupted,
a directional valve (21) is switched into the shut-off position and shuts off the hydraulic oil flow in the closed circuit between the hydraulic motor (13) and the hydraulic pump (12, and
a further directional valve (22) is transferred into a switching position such that an oil flow is established in the open circuit between a hydraulic pump (14) of working hydraulics as pressure source via a pressure line (P) and the hydraulic pump (12), a tank return line (T) and a return filter (18) into the hydraulic tank (19).

2. A forage harvester for agricultural crop material having a front-mounted implement, for example a pick-up or a corn header, and having a chopping drum (1) which is provided with chopping blades (29) and which in the material flow direction (30) is preceded by hydrostatically driven pre-pressing rolls (2, 2', 3, 3'), wherein the hydrostatic drive includes a hydraulic motor (13) and a hydraulic pump (12) coupled into the mechanical drive of the chopping drum (1), and the hydraulic pump (12) can be used on the one hand as the hydrostatic pressure source of the hydraulic motor (13) for driving the pre-pressing rolls (2, 2', 3, 3') and on the other hand as a hydraulic motor for reversing the chopping drum (1), for carrying out the method according to claim 1, **characterized in that** a directional valve (21) is provided, by which the hydraulic oil flow between the hydraulic motor (13) and the hydraulic pump (12) can be shut off.

3. A forage harvester according to claim 2 **characterised in that** the reversing process can be used for re-sharpening the chopping blades (29) by means of a grinding apparatus (33).

4. A forage harvester according to claim 2 **characterised in that** the hydraulic control of the hydraulic pump (12) is so designed in terms of circuitry that on the one hand same hydrostatically drive the hydraulic motor (13) for driving the pre-pressing rolls (2, 2', 3, 3') in a closed circuit and on the other hand it is drivable hydrostatically in an open circuit as the hydraulic motor.

5. A forage harvester according to claim 2 **characterised in that** the open circuit of the hydraulic pump (12) is associated with a hydraulic pump of the operating hydraulic system (14) of the forage harvester.

6. A forage harvester according to claim 2 **characterised in that** a pressure cut-off (24) is associated with the open circuit of the hydraulic pump (12) in such a way that it can be used as a hydraulic brake for the inertia mass of the chopping drum (1).

7. A forage harvester according to claim 2 **characterised in that** a pressure cut-off (23) is associated with the closed circuit of the hydraulic pump (12) in such a way that it can be used as a hydraulic brake for the inertia mass of the pre-pressing rolls (2, 2', 3, 3').

8. A forage harvester according to claim 2 **characterised in that** reversing of the chopping drum (1) can be used for the grinding operation for re-sharpening the chopping blades of the chopping drum (1).

9. A forage harvester according to claims 2 to 9 **characterised in that** the hydraulic control and the circuitry thereof is so designed by directional control valves (21, 22) and pressure cut-offs (23, 24) that the chopping drum (1) and the pre-pressing rolls (2, 2', 3, 3') can be transferred into the various operating states:
a) drive of the pre-pressing rolls (2, 2', 3, 3'),
b) reversing of the chopping drum (1),
c) reversing of the pre- pressing rolls (2, 2', 3, 3'),
d) emergency stopping of the pre-pressing rolls (2, 2', 3, 3'), and
e) deceleration or emergency stopping of the pre-pressing rolls (2, 2', 3, 3') and chopping drum (1).

## Revendications

1. Procédé d'exploitation d'une ensileuse de récolte agricole, comprenant un outil frontal, par exemple un pick-up ou un cueilleur de maïs, et comprenant un rotor de hachage (1) qui est garni de couteaux de hachage (29) et en amont duquel, dans la direction d'écoulement de produit (30), sont disposés des rouleaux de précompression à entraînement hydrostatique (2, 2', 3, 3'), l'entraînement hydrostatique comprenant un moteur hydraulique (13) et une pompe hydraulique (12) couplée à l'entraînement mécanique du rotor de hachage (1), et la pompe hydraulique (12) étant utilisée, d'une part, comme source de pression hydrostatique du moteur hydraulique (13) pour entraîner les rouleaux de précompression (2, 2', 3, 3') et, d'autre part, comme moteur hydraulique pour inverser le rotor de hachage (1) **caractérisé en ce que** pour l'inversion du rotor de hachage (1), un embrayage (6) est débrayé, de telle sorte que la chaîne cinématique (20) entre un moteur à combustion interne (4) et le rotor de hachage (1) et vers la pompe hydraulique (12) soit interrompue,
un distributeur (21) est commuté dans la position de blocage et bloque le flux d'huile hydraulique en circuit fermé entre le moteur hydraulique (13) et la pompe hydraulique (12), et
un distributeur supplémentaire (22) est transféré dans une position de commutation de telle sorte qu'un flux d'huile en circuit ouvert s'établisse entre une pompe hydraulique (14) d'une hydraulique de travail en tant que source de pression par le biais d'une conduite de pression (P) et la pompe hydraulique (12), une conduite de retour au réservoir (T) et un filtre de retour (18) dans le réservoir hydraulique (19).

2. Ensileuse de récolte agricole, comprenant un outil frontal, par exemple un pick-up ou un cueilleur de maïs, et comprenant un rotor de hachage (1) qui est garni de couteaux de hachage (29) et en amont duquel, dans la direction d'écoulement de produit (30), sont disposés des rouleaux de précompression à entraînement hydrostatique (2, 2', 3, 3'), l'entraînement hydrostatique comprenant un moteur hydraulique (13) et une pompe hydraulique (12) couplée à l'entraînement mécanique du rotor de hachage (1), et la pompe hydraulique (12) pouvant être utilisée, d'une part, comme source de pression hydrostatique du moteur hydraulique (13) pour entraîner les rouleaux de précompression (2, 2', 3, 3') et, d'autre part, comme moteur hydraulique pour inverser le rotor de hachage (1) pour réaliser le procédé selon la revendication 1, **caractérisée en ce qu'**un distributeur (21) est prévu, par le biais duquel le flux d'huile hydraulique peut être bloqué entre le moteur hydraulique (13) et la pompe hydraulique (12).

3. Ensileuse selon la revendication 2, **caractérisée en ce que** l'opération d'inversion peut être utilisée pour réaffûter les couteaux de hachage (29) au moyen d'un dispositif d'affûtage (33).

4. Ensileuse selon la revendication 2, **caractérisée en ce que**, en termes de connexions, la commande hydraulique de la pompe hydraulique (12) est conçue de façon que celle-ci, d'une part, entraîne hydrostatiquement en circuit fermé le moteur hydraulique (13) pour entraîner les rouleaux de précompression (2, 2', 3, 3') et, d'autre part, puisse être exploitée hydrostatiquement en circuit ouvert comme moteur hydraulique.

5. Ensileuse selon la revendication 2, **caractérisée en ce que** le circuit ouvert de la pompe hydraulique (12) est associé à une pompe hydraulique de l'hydraulique de travail (14) de l'ensileuse.

6. Ensileuse selon la revendication 2, **caractérisée en ce qu'**au circuit ouvert de la pompe hydraulique (12) est associé un moyen de coupure de pression (24), de façon que celui-ci puisse être utilisé comme frein hydraulique de la masse d'inertie du rotor de hachage (1).

7. Ensileuse selon la revendication 2, **caractérisée en ce qu'**au circuit fermé de la pompe hydraulique (12) est associé un moyen de coupure de pression (23), de façon que celui-ci puisse être utilisé comme frein hydraulique de la masse d'inertie des rouleaux de précompression (2, 2', 3, 3').

8. Ensileuse selon la revendication 2, **caractérisée en ce que** l'inversion du rotor de hachage (1) peut être utilisée pour l'opération d'affûtage afin de réaffûter les couteaux de hachage du rotor de hachage (1).

9. Ensileuse selon les revendications 2 à 9, **caractérisée en ce que** la commande hydraulique et sa connexion par l'intermédiaire de valves directionnelles (21, 22) et de moyens de coupure de pression (23, 24) sont configurées de façon que le rotor de hachage 1 et les rouleaux de précompression (2, 2', 3, 3') puissent être amenés dans les divers états de fonctionnement
a) entraînement des rouleaux de précompression (2, 2', 3, 3')
b) inversion du rotor de hachage (1)
c) inversion des rouleaux de précompression (2, 2', 3, 3')
d) arrêt d'urgence des rouleaux de précompression (2, 2', 3, 3')
e) freinage, respectivement arrêt d'urgence des rouleaux de précompression (2, 2', 3, 3') et du rotor de hachage (1).
